# EUROPÄISCHE PATENTSCHRIFT

(11) **EP 4 242 066 B1**
(45) Veröffentlichungstag und Bekanntmachung des Hinweises auf die Patenterteilung: **29.01.2025**
(21) Anmeldenummer: 23158171.1
(22) Anmeldetag: 23.02.2023
(51) Int. Cl.: B60R 11/04, B60R 11/00

(54) **KAMERAHALTERUNG ZUR BEFESTIGUNG AN EINEM FAHRZEUGAUFBAU**
CAMERA MOUNT FOR ATTACHMENT TO A VEHICLE BODY
SUPPORT DE CAMÉRA DESTINÉ À ÊTRE FIXÉ À LA CARROSSERIE D'UN VÉHICULE

(30) Priorität: 07.03.2022 DE 102022105241
(43) Veröffentlichungstag der Anmeldung: 13.09.2023
(73) Patentinhaber: KNORR-BREMSE Systeme für Nutzfahrzeuge GmbH, 80809 München (DE)
(72) Erfinder: SCHMIEDT, Stefan, 82387 Antdorf (DE); BINDER, Klaus, 83112 Frasdorf (DE); MACKE, Wlodzimierz, 82140 Olching (DE); STEHLIK, Ladislav, 46303 Straz nad Nisou (CZ)

(56) Entgegenhaltungen:
- WO-A1-2004/058542
- WO-A1-2015/088396
- CN-A- 113 645 391
- DE-A1- 10 357 781
- DE-A1- 102018 117 383
- DE-A1- 102018 122 868
- DE-A1- 102020 108 771
- DE-U1- 202007 002 448
- US-A1- 2014 375 809
- US-A1- 2019 297 231

## Beschreibung

Die vorliegende Erfindung betrifft eine Kamerahalterung zur Befestigung an einem Fahrzeugaufbau eines Kraftfahrzeugs gemäß dem Oberbegriff des Anspruchs 1. Die Erfindung betrifft des Weiteren ein Kraftfahrzeug, insbesondere einen Bus oder ein Nutzfahrzeug sowie einen Anhänger, insbesondere einen Nutzfahrzeuganhänger.

Kamerahalterungen zur Befestigung an einem Fahrzeugaufbau sind beispielsweise aus der WO 2004/058542 A1, der WO 2015/088396 A1, der US 2014/0375809 A1, der CN 113 645 391 A, der DE 10 2020 108 771 A1 oder der DE 20 2007 002 448 U1 bekannt, wobei die US 2014/0375809 dem Oberbegriff der Ansprüche 1 und 8 entspricht.

Solche Kamerahalterungen mit darin aufgenommenen Kameras, insbesondere Videokameras, dienen der Verbesserung der Fahrsicherheit. Die in den Kamerahalterungen befestigten Videokameras liefern insbesondere Fahrzeugführern von Nutzfahrzeugen Bildsignale, denen der Fahrzeugführer Informationen über nicht unmittelbar einsehbare Bereiche seitlich, hinter oder auch direkt vor dem Nutzfahrzeug entnehmen kann, um beispielsweise in Abbiegesituationen in einem nicht unmittelbar einsehbaren Bereich sich befindende Personen oder auch Gegenstände frühzeitig erkennen zu können und so eine Kollision zu vermeiden.

Die aus dem Stand der Technik bekannten Kamerahalterungen sind durch ihre relativ zueinander bewegbaren einzelnen Bauteile relativ aufwändig zu fertigen bzw. zu montieren. Insbesondere bei variierbar in ihrer Position fixierbaren Kamerahalterungen ist eine Kalibrierung der Kamera und deren Position notwendig, die nicht in jeder Werkstatt ohne weiteres durchführbar ist.

Bekannt sind auch einfache Haltebleche, an denen die Kameras verschraubt werden können. Allerdings sind diese nicht geeignet, die Kamera vor äußeren Witterungseinflüssen oder auch Beschädigung durch Äste oder dergleichen zu schützen.

Aufgabe der vorliegenden Erfindung ist es, eine Kamerahalterung zur Befestigung an einem Fahrzeugaufbau eines Fahrzeugs, insbesondere eines Busses oder eines Nutzfahrzeugs oder an einem Anhänger eines solchen Fahrzeugs bereitzustellen, die zum einen in einfacher Weise montiert werden kann und die außerdem vor Beschädigungen schützt.

Diese Aufgabe wird durch eine Kamerahalterung mit den Merkmalen des Anspruchs 1 gelöst. Die gestellte Aufgabe wird weiter durch eine Kamerahalterung mit den Merkmalen des Anspruchs 8 gelöst.

Die erfindungsgemäßen Kamerahalterungen weisen ein an dem Fahrzeugaufbau fixierbares Kameraträgerteil mit wenigstens einem Aufnahmeschacht zur Aufnahme zumindest eines Kamerakorpus einer Kamera auf.

Auf dieses Kameraträgerteil ist ein Hüllgehäuse in einer Aufschieberichtung aufstülpbar.

Das Hüllgehäuse weist eine Aufnahmeöffnung zur Aufnahme des Kameraträgerteils und wenigstens eine in einem Gehäusewandbereich vorgesehene Fensteröffnung auf, in oder hinter der ein Objektiv der Kamera positionierbar ist.

An dem Kameraträgerteil ist wenigstens ein um wenigstens einen ersten Verstellwinkel verstellbarer, die Kamera aufnehmender Einsatz angeordnet.

Bei der Kamerahalterung gemäß Anspruch 1 ist der wenigstens eine Aufnahmeschacht durch eine zylindrische Außenwand des Kameraträgerteils begrenzt, in der ein zylindrischer Einsatz mit einer die Kamera aufnehmenden Aufnahme um einen ersten Verstellwinkel um eine erste Drehachse drehbar aufgenommen ist.

An einer Innenwand der Zylinderaufnahme sind sich parallel zur ersten Drehachse erstreckende Führungsstege angeformt, die zur Positionierung der Kamera in seitliche Führungsnuten des Kamerakorpus vorstehen.

Dadurch ist in einfacher Weise eine zuverlässige Halterung der Kamera in der Zylinderaufnahme in der von dem ersten Verstellwinkel überstrichenen Ebene gewährleistet.

Die drehbare Aufnahme des zylindrischen Einsatzes ermöglicht in einfacher Weise eine um eine Längsachse des zylindrischen Einsatzes drehbare Einstellung der Kamera um den ersten Verstellwinkel.

Mit einer solchermaßen ausgebildeten Kamerahalterung ist die Kamera in einfacher Weise in das Kameraträgerteil in einer vorbestimmten Position einsetzbar und um wenigstens eine Achse verstellbar.

Weiter ist das Hüllgehäuse in einfach durchführbarer Weise auf das Kameraträgerteil aufstülpbar.

Die lösbare Befestigbarkeit des Hüllgehäuses am Kameraträgerteil ermöglicht eine einfache Vorpositionierung des Hüllgehäuses am Kameraträgerteil, insbesondere in einem Fall, bei dem das Hüllgehäuse nach Aufstülpen auf das am Fahrzeugaufbau befestigte Kameraträgerteil zusätzlich am Fahrzeugaufbau verklebt werden soll. Die Klebefuge übernimmt dabei zusätzlich eine Dichtfunktion.

Bei der Kamerahalterung gemäß Anspruch 8 ist der wenigstens eine Aufnahmeschacht durch eine sphärische Außenwand des Kameraträgerteils begrenzt, in der ein Einsatz mit sphärischer Außenfläche und einem die Kamera aufnehmenden Aufnahmeraum dreiachsig drehbar aufgenommen ist.

Zur Fixierung des Kamerakorpus ist in einer bevorzugten Weiterbildung der Aufnahmeraum des Einsatzes mit zwei einander gegenüberliegenden Konterflächen ausgebildet, mit denen der Kamerakorpus in einer Ebene senkrecht zu einer Einsteckrichtung, in der die Kamera in den Einsatz einsteckbar ist.

Auch mit einer solchermaßen ausgebildeten Kamerahalterung ist eine beliebige Ausrichtung der Kamera ermöglicht.

Vorteilhafte Ausführungsvarianten der Erfindung sind Gegenstand der Unteransprüche.

Das Kameraträgerteil und das Hüllgehäuse weisen nach einer bevorzugten Ausführungsvariante jeweils Führungskonturen zur Positionierung des Hüllgehäuses auf dem Kameraträgerteil auf.

Die Aufstülpbewegung wird dabei durch die Führungskonturen geführt.

Um die in der Kamerahalterung angeordneten Kameras bei durch die Fensteröffnungen des Hüllgehäuses eintretendem Wasser vor Flutung zu schützen, weist gemäß einer weiteren vorteilhaften Ausführungsvariante ein Boden der Gehäusewand des Hüllgehäuses eine Ablauföffnung auf, durch die das eingetretene Wasser aus dem Hüllgehäuse ablaufen kann.

Gemäß einer weiteren vorteilhaften Ausführungsvariante der Erfindung ist an einer einem frontseitigen Ende abgewandten Stirnfläche des Hüllgehäuses eine Dichtlippe mit einer Nut zur Aufnahme eines Adhäsivs angeformt.

Dies ermöglicht eine zusätzliche Abdichtung des Hüllgehäuses im Anlagebereich zum Fahrzeugaufbau und bei der Befestigung des Hüllgehäuses am Fahrzeugaufbau die Befüllung der Nut mit einem bevorzugt flüssigen oder zähflüssigen Adhäsiv vor dem Aufstülpen des Hüllgehäuses auf das Kameraträgerteil.

Mithilfe des Adhäsivs erfolgt sodann eine Verklebung des Hüllgehäuses mit dem Fahrzeugaufbau und damit eine zusätzliche Fixierung der Kamerahalterung am Fahrzeugaufbau.

Nach einer weiteren vorteilhaften Ausführungsvariante ist das Kameraträgerteil und das Hüllgehäuse durch mehrere lösbare Schnappverbindungen aneinander festgelegt.

Das Kameraträgerteil weist gemäß einer vorteilhaften Ausführungsvariante zwei winklig zueinander angeordnete Aufnahmeschächte zur Aufnahme jeweils eines Einsatzes und das Hüllgehäuse zwei Fensteröffnungen in winklig zueinander ausgerichteten frontseitigen Enden des Hüllgehäuses zur Aufnahme eines Objektivs einer jeweiligen der Kameras auf.

Eine solchermaßen ausgebildete Kamerahalterung ermöglicht in einfacher Weise die Aufnahme von zwei winklig zueinander positionierten Kameras.

Von der Zylinderaufnahme erstreckt sich gemäß einer bevorzugten Weiterbildung senkrecht zur ersten Drehachse eine durch zwei Verbindungswände und eine Blende begrenzte Objektivaufnahme.

Die Verbindungswände dienen dabei gleichzeitig der Begrenzung des ersten Verstellwinkels.

Durch die Blende ist in einfacher Weise ein Abdecken der Fensteröffnung im Hüllgehäuse der Kamerahalterung zur Verhinderung des Eindringens von Schmutz ermöglicht.

Das erfindungsgemäße Fahrzeug, insbesondere Bus oder Nutzfahrzeug zeichnet sich durch eine wie oben beschriebene Kamerahalterung aus.

Der erfindungsgemäße Anhänger, insbesondere Nutzfahrzeuganhänger zeichnet sich durch eine wie oben beschriebene Kamerahalterung aus.

Nachfolgend werden bevorzugte Ausführungsbeispiele anhand der beiliegenden Zeichnungen näher erläutert. Es zeigen:
- Figuren 1 und 2: schematische isometrische Darstellungen einer Ausführungsvariante einer erfindungsgemäßen Kamerahalterung mit über ein Kameraträgerteil überstülptem Hüllgehäuse,
- Figuren 3 und 4: isometrische Darstellungen eines mit zwei Kameras bestückten Kameraträgerteils aus unterschiedlichen Perspektiven,
- Figur 5: eine Frontansicht auf die Kamerahalterung gemäß Figur 2 mit teilweise aufgerissenem Hüllgehäuse zur Darstellung von Führungskonturen des Hüllgehäuses und des Kameraträgerteils,
- Figur 6: eine Schnittdarstellung durch die in Figur 5 mit VI bezeichnete Schnittebene zur Darstellung einer Ablauföffnung des Hüllgehäuses und Schnappverbindungen des Kameraträgerteils.
- Figur 7: eine Frontansicht auf das Kameraträgerteil gemäß Figur 4,
- Figur 8: eine Schnittdarstellung durch die in Figur 7 mit VIII bezeichnete Schnittebene zur Darstellung der Schnappverbindungen des Kameraträgerteils,
- Figur 9: eine isometrische Explosionsdarstellung des Kameraträgerteils mit herausgenommenen Kameras,
- Figur 10: eine Draufsicht auf das Kameraträgerteil gemäß Figur 3,
- Figur 11: eine schematische isometrische Darstellung einer alternativen Ausführungsvariante einer nicht erfindungsgemäßen Kamerahalterung mit über ein Kameraträgerteil überstülptem Hüllgehäuse,
- Figur 12 und 13: isometrische Darstellungen der mit zwei Kameras bestückten weiteren Ausführungsvariante des Kameraträgerteils gemäß Figur 11 aus unterschiedlichen Perspektiven,
- Figur 14: eine teilweise explodierte Draufsicht auf das Kameraträgerteil gemäß Figuren 12 und 13,
- Figur 15: eine schematische isometrische Darstellung einer weiteren alternativen Ausführungsvariante einer erfindungsgemäßen Kamerahalterung mit über ein Kameraträgerteil überstülptem Hüllgehäuse,
- Figur 16 und 17: isometrische Darstellungen der mit zwei Kameras bestückten weiteren Ausführungsvariante des Kameraträgerteils gemäß Figur 15 aus unterschiedlichen Perspektiven, und
- Figur 18: eine teilweise explodierte Draufsicht auf das Kameraträgerteil gemäß Figuren 16 und 17.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Kamerahalterung, Kameraträgerteil, Hüllgehäuse, Aufnahmeschacht, Fensteröffnung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

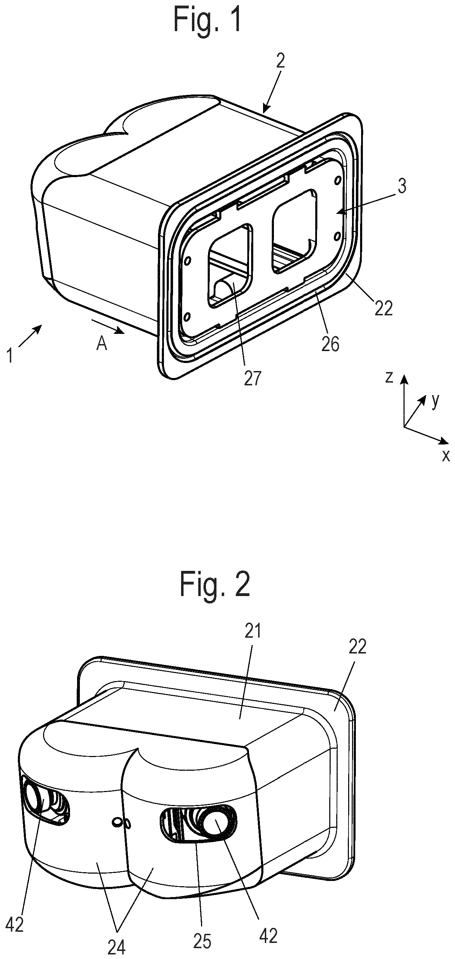

In den **Figuren 1 und 2** ist mit dem Bezugszeichen 1 insgesamt eine erste Ausführungsvariante einer erfindungsgemäßen Kamerahalterung bezeichnet.

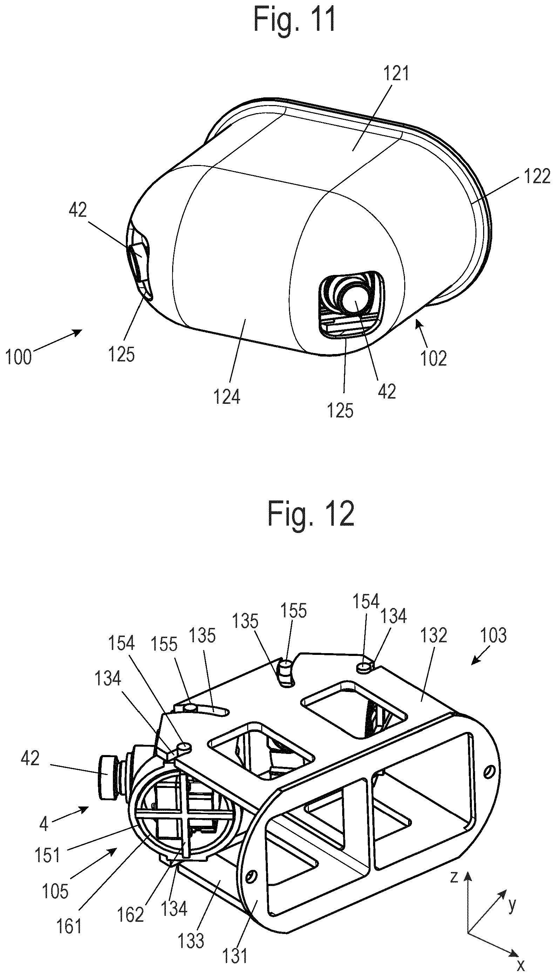

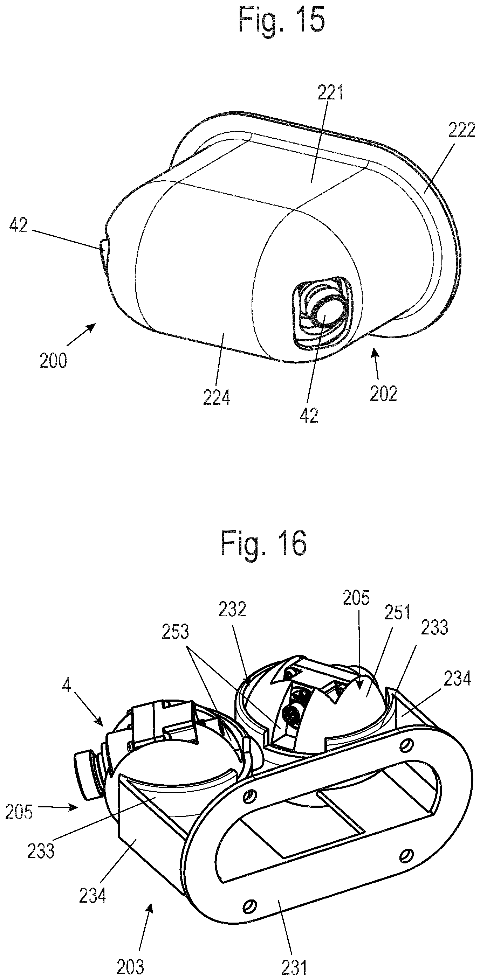

In **Figur 11** ist mit dem Bezugszeichen 100 eine Ausführungsvariante einer nicht erfindungsgemäßen Kamerahalterung bezeichnet und in **Figur 15** mit dem Bezugszeichen 200 eine zweite Ausführungsvariante einer erfindungsgemäßen Kamerahalterung.

Die Kamerahalterung 1, 100, 200 ist dabei an einem Fahrzeugaufbau eines Kraftfahrzeugs, bevorzugt eines Busses oder Nutzfahrzeugs oder an einem Anhänger eines solchen Kraftfahrzeugs oder Nutzfahrzeugs befestigbar, um je nach Anbringungsort am Fahrzeugaufbau Umgebungsbereiche seitlich, hinter oder vor dem Fahrzeugaufbau für den Fahrzeugführer visuell über das Signal einer oder mehrerer in der Kamerahalterung 1, 100, 200 befestigter Kameras, insbesondere Videokameras sichtbar zu machen, die sind.

Den Kamerahalterungen 1, 100, 200 gemeinsam ist der prinzipielle Aufbau aus einem an dem Fahrzeugaufbau fixierbaren Kameraträgerteil 3, 103, 203 sowie einem auf das Kameraträgerteil 3, 103, 203 aufstülpbaren Hüllgehäuse 2, 102, 202 das nach der Fixierung des Kameraträgerteils 3, 103, 203 am Fahrzeugaufbau und dem Einsetzen einer oder in den in den Figuren gezeigten Ausführungsbeispielen zwei Kameras auf das Kameraträgerteil 3, 103, 203 aufgestülpt wird.

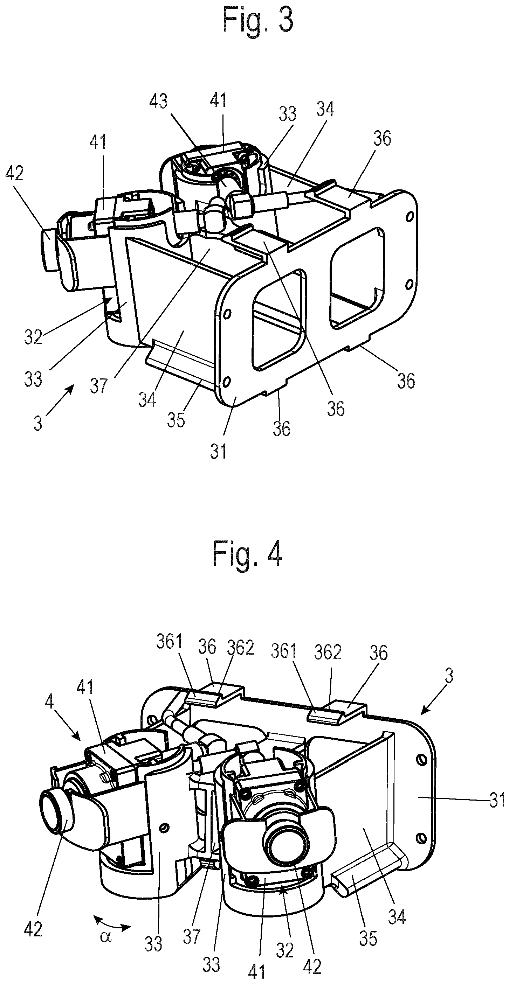

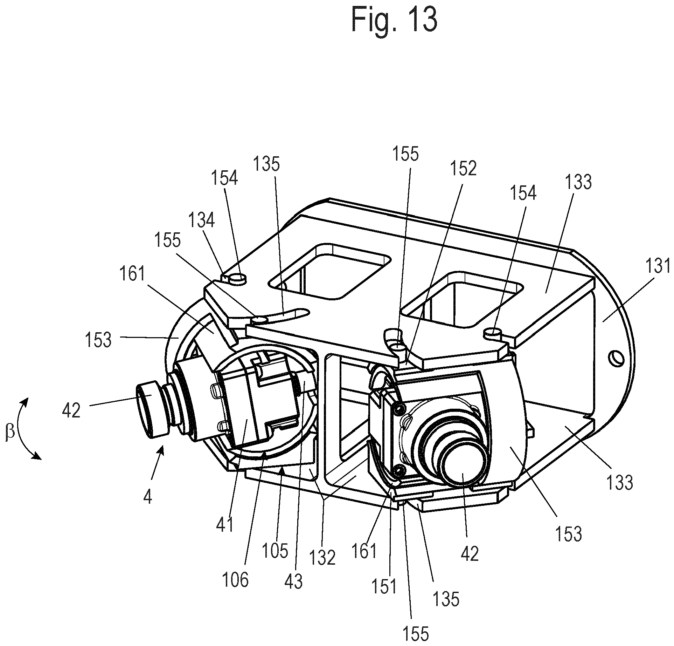

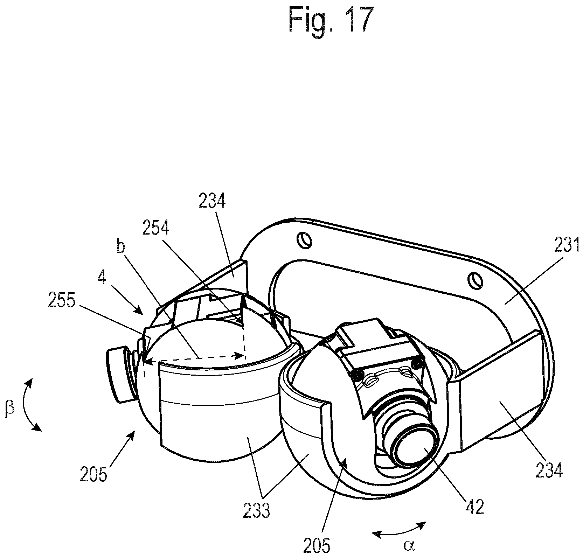

Wie beispielhaft in den **Figuren 3, 4****,** **12****,** **13****,** **16** und 17 gezeigt ist, weist das Kameraträgerteil 3, 103, 203 wenigstens einen Aufnahmeschacht 32, 132,232 zur Aufnahme zumindest eines Kamerakorpus 41 einer Kamera 4 auf.

Bei den hier gezeigten Ausführungsvarianten weist das Kameraträgerteil 3, 103, 203 zwei solcher Aufnahmeschächte 32, 132,232 auf, wobei in jedem der Aufnahmeschächte 32, 132,232 eine Kamera 4 platzierbar ist.

Das Hüllgehäuse 2, 102, 202 weist in einem im montierten Zustand den Fahrzeugaufbau berührenden rückseitigen Seite eine Aufnahmeöffnung auf, die der Aufnahme des Kameraträgerteils 3, 103, 203 dient.

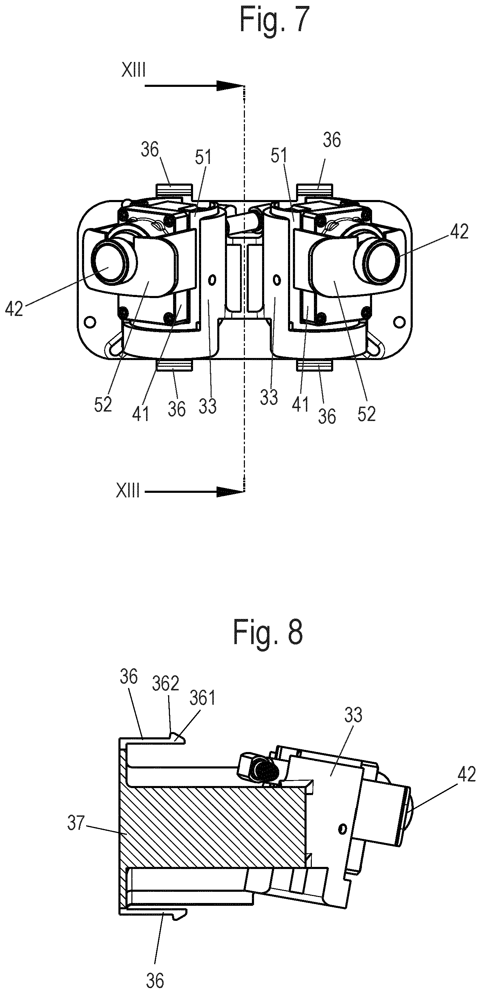

Wie beispielhaft in den Figuren 1, 5, 6 und 8 gezeigt ist, weist das Kameraträgerteil 3, 103, 203 und das Hüllgehäuse 2, 102, 202 jeweils Führungskonturen 29, 35 zur Positionierung des Hüllgehäuses 2, 102, 202 auf dem Kameraträgerteil 3, 103, 203 auf.

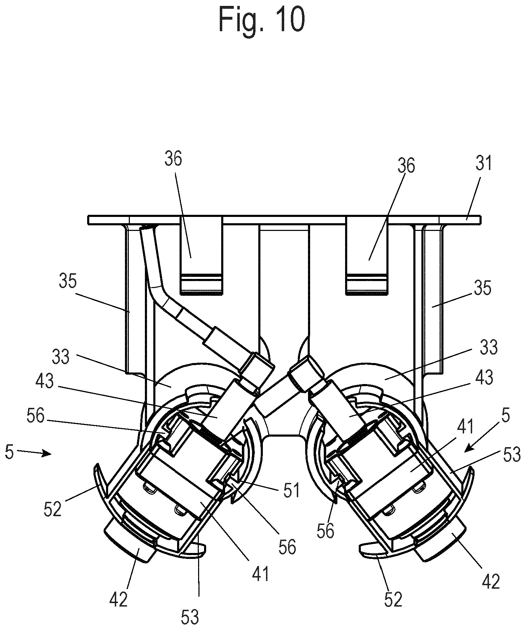

Die Führungskonturen 29, 35 sind hier anhand des in den Figuren 1 - 10 gezeigten ersten Ausführungsbeispiels einer erfindungsgemäßen Kamerahalterung 1 dargestellt, sind aber prinzipiell auch bei den Kamerahalterungen 100, 200 gemäß der zweiten in den Figuren 11-15 und der dritten Ausführungsvariante, gezeigt in den Figuren 16-19, denkbar.

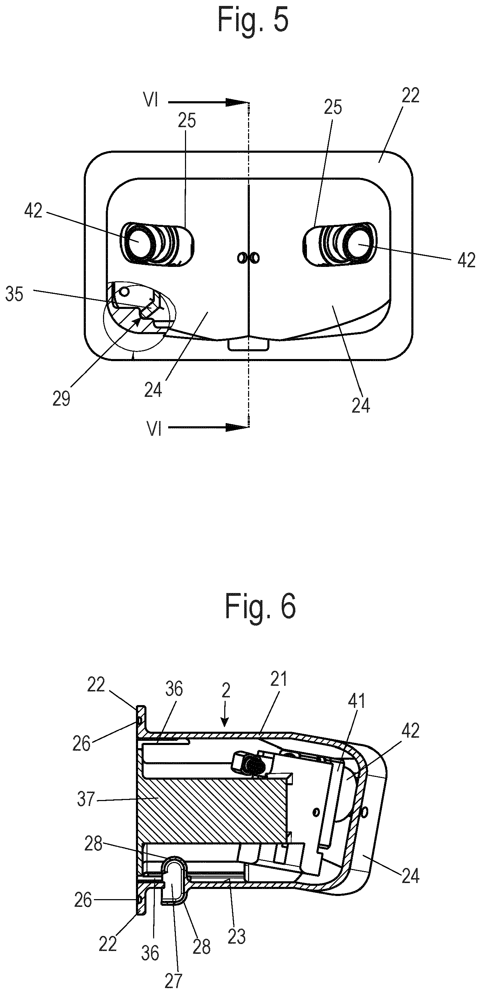

Weiter weist ein Boden 23 der Gehäusewand 21 des Hüllgehäuses 2, wie es in den Figuren 1 und 6 dargestellt ist, eine Ablauföffnung 27 auf.

Die Ablauföffnung 27 ist dabei bevorzugt durch Blenden 28, die den Aufnahmeschacht 32 schützen und dafür sorgen, dass insbesondere beim Waschen, insbesondere mit einem Hochdruckreiniger, möglichst wenig Wasser ins Innere des Hüllgehäuses 2 gelangen kann.

Wie weiter in Figur 1 dargestellt ist, ist an einer einem frontseitigen Ende 24, 124, 224 abgewandten Stirnfläche des Hüllgehäuses 2, 102, 202 eine Dichtlippe 22, 122, 222 mit einer Nut 26 zur Aufnahme eines Adhäsivs angeformt.

Wie weiter den Figuren 1, 3, 4 und 6 bis 8 zu entnehmen ist, ist das Kameraträgerteil 3, 103, 203 und das Hüllgehäuse 2, 102, 202 durch mehrere lösbare Schnappverbindungen aneinander festgelegt.

Die Schnappverbindungen sind hier als sich von einer Montagewand 31, 131, 231 des Kameraträgerteils 3, 103, 203 erstreckende Rastzungen 36 ausgebildet, die in der dafür vorgesehene Ausnehmungen an der Innenseite des Hüllgehäuses 2, 102, 202 einrastbar sind.

Zur Ermöglichung einer Verstellung der wenigstens einen Kamera 4 um einen ersten Verstellwinkel α um eine erste Drehachse ist bei der in den Figuren 1 bis 10 gezeigten ersten Ausführungsvariante der Kamerahalterung 1 der wenigstens eine Aufnahmeschacht 32 durch eine zylindrische Außenwand 33 des Kameraträgerteils 3 begrenzt.

In dieser zylindrischen Außenwand 33 ist ein zylindrischer Einsatz 5 mit einer die Kamera 4 aufnehmenden Aufnahme 51 aufgenommen. Der zylindrische Einsatz 5 ist dabei um die eine erste Drehachse bildende Längsachse des Einsatzes 5 um einen ersten Verstellwinkel α verstellbar in der durch die zylindrische Außenwand 33 definierten Aufnahmeraum verstellbar.

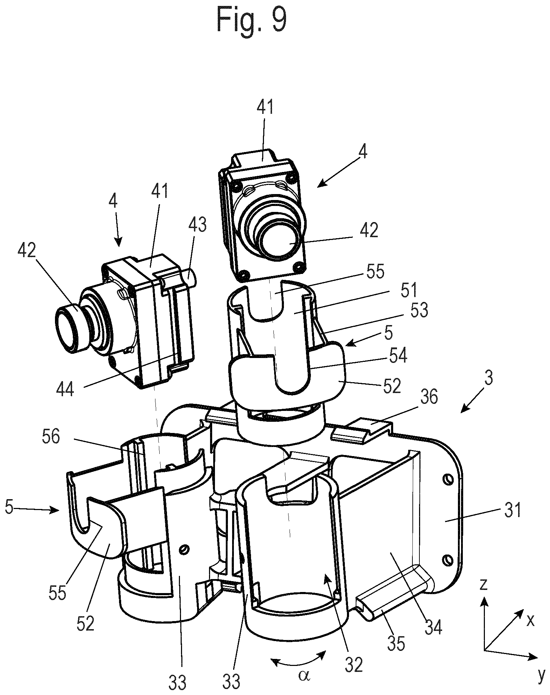

Der Einsatz 5 lässt sich dabei, wie in Figur 9 dargestellt, in einfacher Weise in den durch die Außenwand 33 definierten Aufnahmeschacht 32 einsetzen.

Ebenso einfach lässt sich die Kamera 4 in die Aufnahme 51 des Einsatzes 5 einsetzen.

Zur Verhinderung des Eintretens von Schmutz durch die Fensteröffnungen 25 des Hüllgehäuses 2 erstreckt sich von der Zylinderaufnahme 51 senkrecht zur ersten Drehachse eine durch zwei Verbindungswände 53 und eine Blende 54 begrenzte Objektivaufnahme.

In der Blende 54 ist dabei, wie beispielhaft in Figur 9 dargestellt, eine u-förmige Ausnehmung vorgesehen, in die das Objektiv 42 der Kamera 4 einsetzbar ist.

Entsprechend ist auf der der Blende abgewandten Seite der Aufnahme 51 eine u-förmige Ausnehmung 55 zur Aufnahme eines Steckanschlusses 43 der Kamera 4 vorgesehen.

Zur Fixierung der Kamera 4 in der Zylinderaufnahme sind an einer Innenwand der Zylinderaufnahme 51 sich parallel zur ersten Drehachse erstreckende Führungsstege 56 angeformt, die zur Positionierung der Kamera 4 in seitliche Führungsnuten 44 des Kamerakorpus vorstehen.

Bei der in den Figuren 11 bis 15 gezeigten zweiten Ausführungsvariante einer erfindungsgemäßen Kamerahalterung 100 ist der wenigstens eine Aufnahmeschacht 132 durch zwei ebene parallele Außenwände 133 des Kameraträgerteils 3 begrenzt.

Zwischen den Außenwänden 133, die sich hier in einer XY-Ebene erstrecken, ist ein Einsatz 105 mit einer die Kamera 4 aufnehmenden Aufnahme 151 um einen ersten Verstellwinkel α um eine erste Drehachse drehbar aufgenommen.

Zur geführten Drehbewegung des Einsatzes 105 sind in den Außenwänden 133 erste und zweite Führungsnuten 134, 135 vorgesehen, in denen von Außenwänden 152 des Einsatzes 105 vorstehende erste und zweite Führungsbolzen 154, 155 geführt sind.

Denkbar ist auch, die Führungsbolzen an den Außenwänden des Kameraträgerteils 3 anzuformen und die Führungsnuten entsprechend in den Außenwänden des Einsatzes.

Mithilfe dieses Einsatzes 105 ist analog zum ersten Ausführungsbeispiel, dargestellt in den Figuren 1 bis 10, eine Verstellung der Kameras um eine sich in z-Richtung erstreckende Drehachse ermöglicht.

Wie weiter in den Figuren 12 bis 14 dargestellt ist, weist die Aufnahme 151 einen zylindrischen Innenmantel auf, in dem ein Stellteil 106 mit zylindrischem Außenmantel aufgenommen ist.

Die Kamera 4 ist in dem Stellteil 106 gehalten.

Das Stellteil 106 ist dabei um einen zweiten Verstellwinkel β um eine zur ersten Drehachse senkrechte zweite Drehachse drehbar aufgenommen und ermöglicht eine Ausrichtung der Kamera 4 um eine in der XY-Ebene liegende Drehachse.

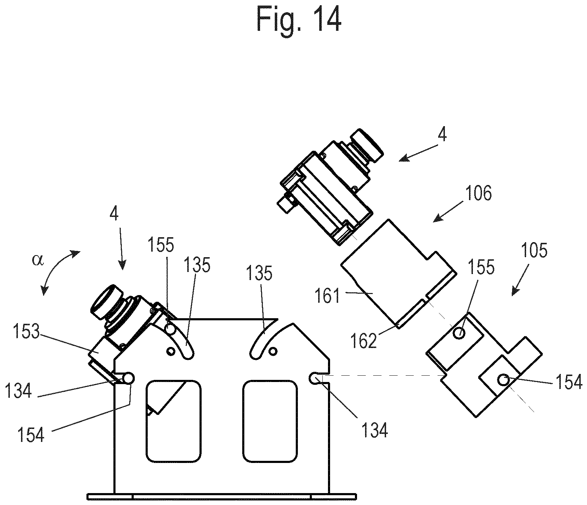

Wie in Figur 14 dargestellt ist, ist auch bei dieser Ausführungsvariante eine äußerst einfache Montage der Kamera 4 und des Stellteils 106 in den Einsatz 105 sowie des Einsatzes 105 in den jeweiligen Aufnahmeschacht 132 des Kameraträgerteils 3 ermöglicht.

In den Figuren 15 bis 18 ist eine dritte Ausführungsvariante einer erfindungsgemäßen Kamerahalterung 200 dargestellt. Die Kamera ist in diesem Ausführungsbeispiel sphärisch gelagert.

Dazu ist der wenigstens eine Aufnahmeschacht 232 durch eine sphärische Außenwand 233 des Kameraträgerteils 203 begrenzt. In diesem Aufnahmeschacht 232 ist ein Einsatz 205 mit sphärischer Außenfläche 251 und einem die Kamera 4 aufnehmenden Aufnahmeraum aufgenommen und ermöglicht damit eine dreiachsig drehbare Lagerung der Kamera 4.

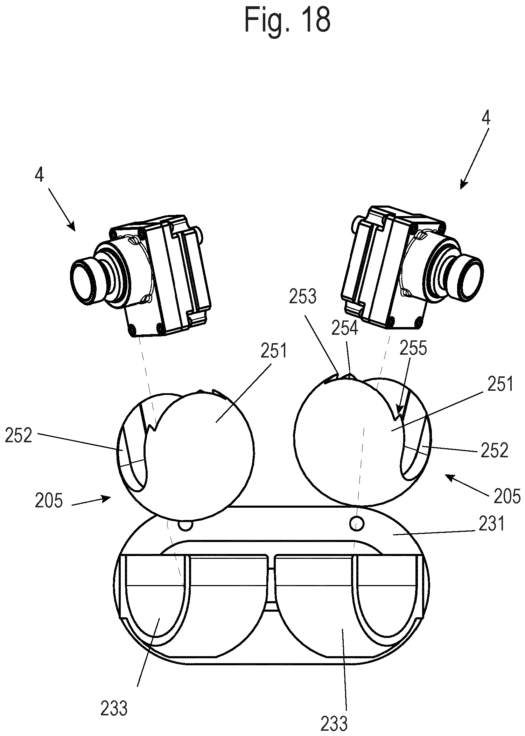

Zur teilweise formschlüssigen Festlegung der Kamera 4 in dem Aufnahmeschacht 232 weist der Aufnahmeraum des Einsatzes 205 zwei einander gegenüberliegenden Konterflächen 254, 255 auf, die der Fixierung des Kamerakorpus 41 in einer Ebene senkrecht zu der Einsteckrichtung, in der die Kamera 4 in den Einsatz 205 einsteckbar ist, fixierbar ist. Die Einsteckrichtung ist dabei aus Figur 18 ersichtlich.

### BEZUGSZEICHENLISTE

- 1: Kamerahalterung

- 2: Hüllgehäuse
- 21: Gehäusewand
- 22: Dichtkragen
- 23: Boden
- 24: frontseitiges Ende
- 25: Fensteröffnung
- 26: Nut
- 27: Ablauföffnung
- 28: Führungskontur

- 3: Kameraträgerteil
- 31: Montagewand
- 32: Aufnahmeschacht
- 33: Außenwand
- 34: Innenwand
- 35: Führungskontur
- 36: Rastzunge
- 361: Rastnase
- 362: Fase

- 4: Kamera
- 41: Kamerakorpus
- 42: Objektiv
- 43: Steckanschluss
- 44: Führungsnut

- 5: Einsatz
- 51: Aufnahme
- 52: Blende
- 53: Verbindungswand
- 54: Ausnehmung
- 55: Ausnehmung
- 56: Führungssteg

- 100: Kamerahalterung

- 102: Hüllgehäuse
- 121: Gehäusewand
- 122: Dichtkragen
- 124: frontseitiges Ende

- 103: Kameraträgerteil
- 131: Montagewand
- 132: Aufnahmeschacht
- 133: Außenwand
- 134: erste Führungsnut
- 135: zweite Führungsnut

- 105: Einsatz
- 151: Aufnahme
- 152: Außenwand
- 153: Verbindungswand
- 154: erster Führungsbolzen
- 155: zweiter erster Führungsbolzen

- 106: zweites Stellteil
- 161: Zylinderaufnahme
- 162: Anschlag
- 163: Verbindungswand
- 164: Ausnehmung
- 165: Ausnehmung

- 200: Kamerahalterung

- 202: Hüllgehäuse
- 221: Gehäusewand
- 222: Dichtkragen
- 224: frontseitiges Ende
- 203: Kameraträgerteil
- 231: Montagewand
- 232: Aufnahmeschacht
- 233: Schachtwand
- 234: Seitenwand

- 205: Einsatz
- 251: Außenfläche
- 252: Objektivaussparung
- 253: Anschlussaussparung
- 254: Konterfläche
- 255: Konterfläche

- A: Aufschieberichtung
- b: Distanz
- α: erster Verstellwinkel
- β: zweiter Verstellwinkel

- x: Richtung
- y: Richtung
- z: Richtung

## Patentansprüche

1. Kamerahalterung (1, 100, 200) zur Befestigung an einem Fahrzeugaufbau eines Kraftfahrzeugs, insbesondere eines Busses oder Nutzfahrzeugs, oder einem Anhänger des Kraftfahrzeugs, aufweisend
ein an dem Fahrzeugaufbau fixierbares Kameraträgerteil (3, 103, 203) mit wenigstens einen Aufnahmeschacht (32, 132, 232) zur Aufnahme zumindest eines Kamerakorpus (41) einer Kamera (4),
ein auf das Kameraträgerteil (3, 103, 203) in einer Aufschieberichtung (A) lösbar aufstülpbares Hüllgehäuse (2, 102, 203),
wobei das Hüllgehäuse (2) eine Aufnahmeöffnung (20) zur Aufnahme des Kameraträgerteils (3) und wenigstens eine in einem Gehäusewandbereich (24) vorgesehene Fensteröffnung (25) aufweist, in oder hinter der ein Objektiv (42) der Kamera (4) positionierbar ist,
wobei an dem Kameraträgerteil (3) wenigstens ein um wenigstens einen ersten Verstellwinkel (α) verstellbarer, die Kamera (4) aufnehmender Einsatz (5, 105, 205) angeordnet ist,
wobei der wenigstens eine Aufnahmeschacht (32) durch eine zylindrische Außenwand (33) des Kameraträgerteils (3) begrenzt ist, in der ein zylindrischer Einsatz (5) mit einer die Kamera (4) aufnehmenden Aufnahme (51) um einen ersten Verstellwinkel (α) um eine erste Drehachse drehbar aufgenommen ist,
**dadurch gekennzeichnet, dass**
an einer Innenwand der Zylinderaufnahme (51) sich parallel zur ersten Drehachse erstreckende Führungsstege (56) angeformt sind, die zur Positionierung der Kamera (4) in seitliche Führungsnuten (44) des Kamerakorpus vorstehen.

2. Kamerahalterung (1) nach Anspruch 1, **dadurch gekennzeichnet, dass** das Kameraträgerteil (3, 103, 203) und das Hüllgehäuse (2, 102, 202) jeweils Führungskonturen (29, 35) zur Positionierung des Hüllgehäuses (2) auf dem Kameraträgerteil (3) aufweisen.

3. Kamerahalterung (1) nach Anspruch 1 oder 2, **dadurch gekennzeichnet, dass** ein Boden (23) der Gehäusewand (21, 121, 221) des Hüllgehäuses (2, 102, 202) eine Ablauföffnung (27) aufweist.

4. Kamerahalterung (1) nach einem der vorstehenden Ansprüche, **dadurch gekennzeichnet, dass** an einer einem frontseitigen Ende (24, 124, 224) abgewandten Stirnfläche des Hüllgehäuses (2, 102, 202) eine Dichtlippe (22, 122, 222) mit einer Nut (26) zur Aufnahme eines Adhäsivs angeformt ist.

5. Kamerahalterung (1) nach einem der vorstehenden Ansprüche, **dadurch gekennzeichnet, dass** das Kameraträgerteil (3, 103, 203) und das Hüllgehäuse (2, 102, 202) durch mehrere lösbare Schnappverbindungen aneinander festgelegt ist.

6. Kamerahalterung (1) nach einem der vorstehenden Ansprüche, **dadurch gekennzeichnet, dass** das Kameraträgerteil (3, 103, 203) zwei winklig zueinander angeordnete Aufnahmeschächte (32, 132, 232) zur Aufnahme jeweils eines Einsatzes (5, 105, 205) und das Hüllgehäuse (2, 102, 202) zwei Fensteröffnungen (25, 125, 225) in winklig zueinander ausgerichteten frontseitigen Enden (24, 124, 224) des Hüllgehäuses (2, 102, 202) zur Aufnahme eines Objektivs (42) einer jeweiligen der Kameras (4) aufweist.

7. Kamerahalterung (1) nach einem der vorstehenden Ansprüche, **dadurch gekennzeichnet, dass** sich von der Zylinderaufnahme (51) senkrecht zur ersten Drehachse eine durch zwei Verbindungswände (53) und eine Blende (54) begrenzte Objektivaufnahme erstreckt.

8. Kamerahalterung (200) zur Befestigung an einem Fahrzeugaufbau eines Kraftfahrzeugs, insbesondere eines Busses oder Nutzfahrzeugs, oder einem Anhänger des Kraftfahrzeugs, aufweisend
ein an dem Fahrzeugaufbau fixierbares Kameraträgerteil (203) mit wenigstens einen Aufnahmeschacht (232) zur Aufnahme zumindest eines Kamerakorpus (41) einer Kamera (4),
ein auf das Kameraträgerteil (203) in einer Aufschieberichtung (A) lösbar aufstülpbares Hüllgehäuse (202),
wobei das Hüllgehäuse (202) eine Aufnahmeöffnung (20) zur Aufnahme des Kameraträgerteils (203) und wenigstens eine in einem Gehäusewandbereich (24) vorgesehene Fensteröffnung (25) aufweist, in oder hinter der ein Objektiv (42) der Kamera (4) positionierbar ist,
wobei an dem Kameraträgerteil (203) wenigstens ein um wenigstens einen ersten Verstellwinkel (α) verstellbarer, die Kamera (4) aufnehmender Einsatz (205) angeordnet istwobei der wenigstens eine Aufnahmeschacht (232) durch eine sphärische Außenwand (233) des Kameraträgerteils (203) begrenzt ist, in der ein Einsatz (205) mit sphärischer Außenfläche (251) und einem die Kamera (4) aufnehmenden Aufnahmeraum dreiachsig drehbar aufgenommen ist,
**dadurch gekennzeichnet, dass**
der Aufnahmeraum des Einsatzes (205) zwei einander gegenüber liegenden Konterflächen (254, 255) zur Fixierung des Kamerakorpus (41) in einer Ebene senkrecht zu einer Einsteckrichtung, in der die Kamrea (4) in den Einsatz (205) einsteckbar ist.

9. Kraftfahrzeug, insbesondere Bus oder Nutzfahrzeug, **dadurch gekennzeichnet, dass** das Kraftfahrzeug wenigstens eine Kamerahalterung (1) nach einem der vorstehenden Ansprüche aufweist.

10. Anhänger, insbesondere Nutzfahrzeuganhänger, **dadurch gekennzeichnet, dass** der Anhänger wenigstens eine Kamerahalterung (1) nach einem der vorstehenden Ansprüche 1 bis 8 aufweist.

## Claims

1. Camera mount (1, 100, 200) for securing to a vehicle body of a motor vehicle, in particular a bus or utility vehicle, or a trailer of the motor vehicle, having
a camera support part (3, 103, 203) fixable to the vehicle body and has at least one receiving shaft (32, 132, 232) for receiving at least one camera body (41) of a camera (4),
an encasing housing (2, 102, 203) that can be detachably placed over the camera support part (3, 103, 203) in a sliding-on direction (A),
wherein the encasing housing (2) has a receiving opening (20) for receiving the camera support part (3) and at least one window opening (25) provided in a wall housing region (24), in or behind which a lens (42) of the camera (4) can be positioned,
wherein at least one insert (5, 105, 205) which receives the camera (4) and is adjustable through at least a first angle of adjustment (a) is arranged on the camera support part (3),
wherein the at least one receiving shaft (32) is bounded by a cylindrical outer wall (33) of the camera support part (3), in which a cylindrical insert (5) having a receptacle (51) receiving the camera (4) is received so as to be rotatable through a first angle of adjustment (a) about a first axis of rotation, **characterized in that**
on an inner wall of the cylindrical receptacle (51), guide webs (56) are formed that extend parallel to the first axis of rotation and project into lateral guide grooves (44) of the camera body in order to position the camera (4).

2. Camera mount (1) according to claim 1, **characterized in that** the camera support part (3, 103, 203) and the encasing housing (2, 102, 202) each have guide contours (29, 35) for positioning the encasing housing (2) on the camera support part (3).

3. Camera mount (1) according to claim 1 or 2, **characterized in that** a base (23) of the housing wall (21, 121, 221) of the encasing housing (2, 102, 202) has a drain outlet (27).

4. Camera mount (1) according to any one of the preceding claims, **characterized in that** a sealing lip (22, 122, 222) with a groove (26) for receiving an adhesive is formed on an end face of the encasing housing (2, 102, 202) facing away from a front end (24, 124, 224).

5. Camera mount (1) according to any one of the preceding claims, **characterized in that** the camera support part (3, 103, 203) and the encasing housing (2, 102, 202) are fixed to one another by multiple detachable snap connections.

6. Camera mount (1) according to any one of the preceding claims, **characterized in that** the camera support part (3, 103, 203) has two receiving shafts (32, 132, 232) arranged at an angle to one another, each for receiving an insert (5, 105, 205), and the encasing housing (2, 102, 202) has two window openings (25, 125, 225) in front ends (24, 124, 224) of the encasing housing (2, 102, 202) that are aligned at an angle to one another, for receiving a lens (42) of a respective camera (4).

7. Camera mount (1) according to any one of the preceding claims, **characterized in that** a lens receptacle which is bounded by two connecting walls (53) and a diaphragm (54) extends from the cylindrical receptacle (51) perpendicular to the first axis of rotation.

8. Camera mount (200) for securing to a vehicle body of a motor vehicle, in particular a bus or utility vehicle, or a trailer of the motor vehicle, comprising
a camera support part (203) fixable to the vehicle body and has at least one receiving shaft (232) for receiving at least one camera body (41) of a camera (4),
an encasing housing (202) that can be detachably placed over the camera support part (203) in a sliding-on direction (A),
wherein the encasing housing (202) has a receiving opening (20) for receiving the camera support part (203) and at least one window opening (25) provided in a wall housing region (24), in or behind which a lens (42) of the camera (4) can be positioned,
wherein at least one insert (205) which receives the camera (4) and is adjustable through at least a first angle of adjustment (a) is arranged on the camera support part (203), wherein the at least one receiving shaft (232) is bounded by a spherical outer wall (233) of the camera support part (203), in which an insert (205) having a spherical outer surface (251) and a receiving space receiving the camera (4) is received such that it can rotate on three axes, **characterized in that**
the insertion space of the insert (205) two opposing countersurfaces (254, 255) for fixing the camera body (41) in a plane perpendicular to an insertion direction in which the camera (4) can be inserted into the insert (205).

9. Motor vehicle, in particular bus or utility vehicle, **characterized in that** the motor vehicle has at least one camera mount (1) according to any one of the preceding claims.

10. Trailer, in particular utility vehicle trailer, **characterized in that** the trailer has at least one camera mount (1) according to any one of the preceding claims 1 to 8.

## Revendications

1. Support de caméra (1, 100, 200) destiné à être fixé à la carrosserie d'un véhicule automobile, en particulier d'un bus ou d'un véhicule utilitaire, ou à une remorque du véhicule automobile, présentant
une partie de support de caméra (3, 103, 203) pouvant être fixé à la carrosserie du véhicule avec au moins un puits de logement (32, 132, 232) pour loger au moins un corps de caméra (41) d'une caméra (4),
un boîtier d'enveloppe (2, 102, 203) pouvant être emboîté de manière amovible sur la partie de support de caméra (3, 103, 203) dans une direction d'enfilage (A),
dans lequel le boîtier d'enveloppe (2) présente une ouverture de logement (20) pour loger la partie de support de caméra (3) et au moins une ouverture de fenêtre (25) prévue dans une zone de paroi de boîtier (24), ouverture dans ou derrière laquelle un objectif (42) de la caméra (4) peut être positionné,
dans lequel au moins un insert (5, 105, 205) réglable d'au moins un premier angle de réglage (a) et logeant la caméra (4) est disposé sur la partie de support de caméra (3),
dans lequel le au moins un puits de logement (32) est délimité par une paroi extérieure cylindrique (33) de la partie de support de caméra (3) dans laquelle un insert cylindrique (5) avec un logement (51) logeant la caméra (4) est logé de manière rotative selon un premier angle de réglage (a) autour d'un premier axe de rotation, **caractérisé en ce que**
des nervures de guidage (56) s'étendant parallèlement au premier axe de rotation sont formées sur une paroi intérieure du logement de cylindre (51), qui font saillie dans des rainures de guidage latérales (44) du corps de caméra pour le positionnement de la caméra (4).

2. Support de caméra (1) selon la revendication 1, **caractérisé en ce que** la partie de support de caméra (3, 103, 203) et le boîtier d'enveloppe (2, 102, 202) présentent respectivement des contours de guidage (29, 35) pour le positionnement du boîtier d'enveloppe (2) sur la partie de support de caméra (3).

3. Support de caméra (1) selon la revendication 1 ou 2, **caractérisé en ce qu'**un fond (23) de la paroi de boîtier (21, 121, 221) du boîtier d'enveloppe (2, 102, 202) présente une ouverture d'évacuation (27).

4. Support de caméra (1) selon l'une quelconque des revendications précédentes, **caractérisé en ce qu'**une lèvre d'étanchéité (22, 122, 222) est formée sur une surface frontale du boîtier d'enveloppe (2, 102, 202) opposée à une extrémité avant (24, 124, 224) avec une rainure (26) pour loger un adhésif.

5. Support de caméra (1) selon l'une quelconque des revendications précédentes, **caractérisé en ce que** la partie de support de caméra (3, 103, 203) et le boîtier d'enveloppe (2, 102, 202) sont fixés l'un à l'autre par plusieurs liaisons à encliquetage amovibles.

6. Support de caméra (1) selon l'une quelconque des revendications précédentes, **caractérisé en ce que** la partie support de caméra (3, 103, 203) présente deux puits de logement (32, 132, 232) disposés l'un par rapport à l'autre selon un angle pour loger respectivement un insert (5, 105, 205), et le boîtier d'enveloppe (2, 102, 202) présente deux ouvertures de fenêtre (25, 125, 225) dans des extrémités frontales (24, 124, 224) du boîtier d'enveloppe (2, 102, 202) orientées l'une par rapport à l'autre selon un angle pour loger un objectif (42) d'une caméra (4) respective.

7. Support de caméra (1) selon l'une quelconque des revendications précédentes, **caractérisé en ce qu'**un logement d'objectif délimité par deux parois de liaison (53) et un diaphragme (54) s'étend du logement de cylindre (51) perpendiculairement au premier axe de rotation.

8. Support de caméra (200) destiné à être fixé sur la carrosserie d'un véhicule automobile, en particulier d'un bus ou d'un véhicule utilitaire, ou sur une remorque du véhicule automobile, présentant
une partie de support de caméra (203) pouvant être fixé sur la carrosserie du véhicule avec au moins un puits de logement (232) pour loger au moins un corps de caméra (41) d'une caméra (4),
un boîtier d'enveloppe (203) pouvant être emboîté de manière amovible sur la partie de support de caméra (202) dans une direction d'enfilage (A),
dans lequel le boîtier d'enveloppe (202) présente une ouverture de logement (20) pour loger la partie de support de caméra (203) et au moins une ouverture de fenêtre (25) prévue dans une zone de paroi de boîtier (24), ouverture dans ou derrière laquelle un objectif (42) de la caméra (4) peut être positionné,
dans lequel au moins un insert (205) logeant la caméra (4) réglable d'au moins un premier angle de réglage (a) est disposé sur la partie de support de caméra (203), dans laquelle le au moins un puits de logement (232) est délimité par une paroi extérieure sphérique (233) de la partie de support de caméra (203) dans laquelle un insert (205) avec une surface extérieure sphérique (251) et un espace de logement logeant la caméra (4) est logé de manière rotative sur trois axes, **caractérisé en ce que**
l'espace de logement de l'insert (205) présente deux contre-surfaces (254, 255) opposées l'une à l'autre pour fixer le corps de caméra (41) dans un plan perpendiculaire à une direction d'insertion dans laquelle la caméra (4) peut être insérée dans l'insert (205).

9. Véhicule automobile, en particulier bus ou véhicule utilitaire, **caractérisé en ce que** le véhicule automobile présente au moins un support de caméra (1) selon l'une quelconque des revendications précédentes.

10. Remorque, en particulier remorque de véhicule utilitaire, **caractérisée en ce que** la remorque présente au moins un support de caméra (1) selon l'une quelconque des revendications précédentes 1 à 8.
